# EUROPEAN PATENT SPECIFICATION

(11) **EP 4 459 043 B1**
(45) Date of publication and mention of the grant of the patent: **26.11.2025**
(21) Application number: 23171678.8
(22) Date of filing: 04.05.2023
(51) Int. Cl.: E01C 11/24, C09K 5/06, E01C 13/08

(54) **ARTIFICIAL TURF WITH PASSIVE TEMPERATURE CONTROL**
KUNSTRASEN MIT PASSIVER TEMPERATURREGELUNG
GAZON ARTIFICIEL AVEC RÉGULATION PASSIVE DE LA TEMPÉRATURE

(43) Date of publication of application: 06.11.2024
(73) Proprietor: APT Asia pacific Pty. Ltd., Dandenong, Victoria 3175 (AU)
(72) Inventor: Tritt, James Michael, Beaconsfield, VIC 3807 (AU); Corbo, Robert, Cranbourne North, VIC 3977 (AU); Luddu, Sumeet, Chirnside Park, VIC 3116 (AU)
(74) Representative: Richardt Patentanwälte PartG mbB

(56) References cited:
- CN-A- 111 778 805
- CN-U- 205 604 009
- US-A1- 2013 199 755

## Description

### Field of the invention

The invention relates generally to an artificial turf and, more particularly, to an artificial turf with passive temperature control.

### Background and related art

Use of artificial turf is increasing because it is easier to maintain than natural turf and its surface characteristics are in many respects better than those of natural turf. Typically, artificial turf is manufactured by extruding a thermoplastic resin to produce artificial turf fiber which is inserted on a carrier via a process known as tufting. The polymer fibers on the surface of the artificial turf are in the form of loops often referred to as piles. Often, a polymer resin is applied on the back side of the carrier for enhancing the structural stability and the pile pulling characteristics of the artificial turf. Artificial turf is used in many applications including household floor matting, playing surface for sports such as soccer, football, rugby, tennis, golf, exercise fields, landscaping applications and the like.

A problem with existing artificial turfs is that they are prone to rapid overheating during sunny and warm days.

The general concept of using a phase change material ("PCM") to cool various surfaces is known. For example, patent document US20130199755A1 describes an infill for artificial turf comprising PCM components to reduce the heat buildup on or near the artificial turf. CN111778805A describes using a PCM in a polypropylene backing of an artificial turf. KR101149423B1 describes a filler for an artificial turf comprising PCM components to reduce the heat buildup on or near the artificial turf. It also describes sandblasting layer comprising silica sand in the turf system.

Despite the above and other rather limited attempts to use PCMs for cooling artificial turf surfaces, up to now there has not been a solution that has gained wide acceptance in the market place. Hence, further improvements are needed for providing a cooling solution for artificial turf surfaces with satisfactory performance characteristics in varying weather conditions over an extended period of time.

### Summary of the Present Invention

Accordingly, it is an object of the present invention to provide an artificial turf with improved temperature control property. It is also an object of the present invention to provide a method for manufacturing the artificial turf.

According to an aspect of the present invention an artificial turf is provided with passive temperature control. In accordance with some embodiments of the invention, a phase change material is mixed into at least one layer of the backing structure of the artificial turf to cool the backing structure when exposed to intensive sunshine during a game. The backing structure also contains a heat conductive layer employing a heat conductive material. The heat conductive layer is disposed between the at least one PCM containing layer of the backing structure and a substrate. The substrate may be any suitable surface including concrete, asphalt, a sand layer, a rock layer or the ground. The ground serves as a heat sink such that the phase transition is reversed for another usage cycle. The phase transitions are hysteresis like. The heat conductive material comprises graphite, graphene, or a combination of graphite and graphene. In some embodiments, the graphite may be nano-graphite. The PCM is preferably encapsulated in microcapsules or macrocapsules.

More specifically, the present invention provides an artificial turf structure (also referred to simply as artificial turf) employing at least one PCM and a heat conductive layer of graphite, graphene or a combination thereof , and methods of forming the artificial turf structure as defined in the independent claims. Various embodiments of the present invention are given in the dependent claims.

According to the invention, an artificial turf is provided comprising a carrier, an artificial turf fiber incorporated into the carrier such that a first portion of the artificial turf fiber protrudes to a back side of the carrier, a second portion of the artificial turf fiber protrudes to a front side of the carrier, and a third portion of the artificial turf fiber is inside the carrier and a polyurethane backing formed on the back side of the carrier, characterized in that a phase change material (PCM) is added in the polyurethane backing and/or in at least one layer formed over the carrier.

The artificial turf further comprises a heat conductive layer formed on the back side of the polyurethane backing, the heat conductive layer comprising a heat conductive material. The heat conductive material is graphite, graphene, or a combination of graphite and graphene.

In some embodiments the at least one PCM layer formed over the carrier may comprise a first and a second PCM layers, the second PCM layer being disposed on the first PCM layer, The first PCM layer comprises at least one first PCM, and the second PCM layer comprises at least one second PCM, wherein the at least one first and second PCMs are dispersed within first and second acrylic materials.

The PCM layer may preferably be the top layer of the backing structure. The heat conductive layer provides improved heat conductivity between the substrate and the PCM layer. The combination of the heat conductive sub-layer and the PCM layer as the outermost top layer of the backing structure has been found to be particularly advantageous in preventing the surface of the pavement structure from overheating.

In some embodiments, the PCM may be added in a polyurethane backing of the artificial turf structure. For example, a method for manufacturing the artificial turf with the PCM containing PU backing comprises incorporating artificial turf fiber into a carrier, and adding a viscous polyurethane reaction mixture with the PCM mixed therein onto a back side of the carrier to form the PCM containing polyurethane backing, Hence, the PCM may be added in the polyurethane reaction mixture. More than one PCMs may be added with staggered melting points within a desired temperature control range. The PCM containing PU backing layer may be preferably be designed to pass through the carrier and form a layer which extends above and below the carrier. The backing structure may further include a second PU backing layer that is formed on the underside of the top PU backing layer once the top PU backing layer has hardened. The second PU backing layer may not contain any PCM. The second PU backing layer may in some embodiments include the heat conductive material. Alternatively, a separate third PU layer containing the heat conductive material may be formed on the underside of the second PU backing layer.

In some embodiments, at least one PCM containing coating layer, preferably at least two PCM containing coating layers may be formed over the top side of the carrier prior to the application of the first PU backing layer. In such embodiments, the first PU backing layer may be free of any PCM. The PCM containing coating layer (also referred to as PCM layer) or layers may for example, be acrylic based layers. In such embodiments the backing structure may comprise from top to bottom, the PCM layer (or layers, e.g., two layers), formed over the top side of the carrier, a PU backing layer formed on the underside of the carrier layer and a heat conductive PU backing layer containing the heat conductive material. In this embodiment, it should be understood that both the PCM layer or layers and the PU backing layer may also enter at least partially inside the structure of the carrier if the carrier is a porous material.

In some embodiments, at least two PCM layers are formed over the top side of the carrier. Each of the at least two PCM layers comprises at least one PCM. The at least two PCM layers may be identical or may be different. The at least one PCM in each of the at least two PCM layers may be the same or different. The melting point of the at least one PCM in each of the at least two PCM layers may be the same or different. In some embodiments, the outermost PCM layer (the top PCM layer or second PCM layer) may have a higher amount of PCM than the first PCM layer which is adjacent to the carrier. Higher amount of PCM as the term is used here means higher percentage by weight of PCM based of the total weight of the PCM layer.

It has been unexpectedly found that employing at least two PCM layers with different PCM amounts by weight and or melting points is advantageous because it allows a more effective utilization of the PCM and more effective cooling by absorbing the heat generated during hot sunny days. For example, use of different PCMs by type (different melting point) or amount may allow the backing structure surface to be tuned to have better performance depending upon the anticipated surface temperature reduction requirement. For example, for backing structure surfaces with darker colour, PCMs with higher melting point may be used to achieve similar cooling effect compared to backing structure surfaces with lighter colours.

Moreover, adding the heat conductive material allows the backing structure to operate as a reversible heat pump wherein heat from the ground can be effectively transferred through the backing structure.

The at least one first and second PCMs may be the same or different, and may have a melting point from 15 °C to 45 °C, preferably 25 °C to 40 °C, and more preferably 25 °C to 37 °C. In some embodiments, the amount of the PCM in the first PCM layer may be at least 5.0 %, in particular 10 to 30 %, and more in particular 10 to 25 % less than the amount of the PCM in the second PCM layer.

In some embodiments, the at least one heat conductive layer may include the graphene or the graphite or of the combination of graphene and graphite in an amount of from 6.0 to 24 % by weight in particular from 7.0 to 17.0 % by weight, and more in particular from 10.0 to 14.0 % by weight based on the total weight of the heat conductive sub-layer.

The PCM may be in an amount of from 5.0 to 12.5 % by weight, in particular from 6.0 to 10.0 % by weight, and more in particular from 7.0 to 9.0 % by weight based on a total weight of the at least one PCM layer.

In some embodiments, the at least one PCM layer may have a height of 200 µm to 800 µm, in particular 400 µm to 600 µm, and more in particular 450 µm to 550 µm.

In some embodiments, the heat conductive layer has a height of 5 µm - 500 µm, 50 µm - 300 µm, preferably 100 µm - 150 µm.

The at least one first PCM and the at least one second PCM may be paraffin-based materials comprising preferably 50-65 wt% paraffin wax, and are preferably encapsulated inside microcapsules or macrocapsules, each macrocapsule containing a plurality of microcapsules, and/or the at least one first PCM and the at least one second PCM contain a PCM within a secondary supporting structure of hydrophilic silica powder that keeps the PCM solid in its macroscopic form.

The macrocapsules may have a particle size of 200 to 800 micrometers, preferably 200 to 400 micrometers, and more preferably 200 to 400 micrometers. The microcapsules may have a particle size of 15 to 30 micrometers.

In some embodiments, the heat conductive material may be a nano-graphite composite with the content of nano-graphite ranging from 5.0 to 15.0 % by weight, in particular 8.0 to 12.0 % by weight, and more in particular 9.0 to 11.0 % by weight based on the total weight of the heat conductive layer composition, The thermal conductivity increases gradually with the content of the nano-graphite.

The turf fibers may be made of any suitable polymer material including , for example, polyamide, polypropylene and polyethylene. Preferably, the turf fibers may be made of hydrophobic polyethylene selected from the group consisting of polyethylene homopolymer, polyethylene alloy, polyethylene copolymer, and polyethylene impact copolymer.

Incorporating the turf fibers into the carrier includes positioning the fiber so that a first portion of the fiber is located at the back side of the carrier (also referred to hereinafter as the back portion of the fiber), a second portion of the fiber is protruding to the front side of the carrier (also referred to hereinafter as the front portion of the fiber) and a third portion of the fiber is inside the carrier (referred to also as the middle portion of the fiber or the carrier portion of the fiber).

In some embodiments, the polyurethane reaction mixture includes at least one polyol, at least one isocyanate and a curing agent. In the embodiments where at least one PCM is used in the PU backing, the at least one PCM is mixed in the PU reaction mixture together with other additives and an antimicrobial agent. Preferably, the at least one PCM in encapsulated powder form is mixed either in the polyol or the isocyanate container which are added in the reaction mixture and mixed just before the application of the polyurethane reaction mixture over the back side of the carrier of the artificial turf.

In some embodiments, the polyurethane is the reaction product of first and second polyols with an isocyanate, wherein the first polyol is polyether polyol and/or polyester polyol having at least 2 hydroxyl groups per molecule, wherein the second polyol is polybutadiene diol, wherein the isocyanate comprises isocyanate monomers, isocyanate polymers or isocyanate prepolymers or a mixture thereof, and wherein the isocyanate monomers, the isocyanate polymers and the isocyanate prepolymers have two or more isocyanate groups per molecule.

These and other features and advantages of the present invention will become better understood from the following detailed description of the invention in conjunction with the accompanying drawings.

### Brief Description of the Drawings

Figure 1 illustrates a flowchart of a method of manufacturing of an artificial turf with a PCM in the polyurethane backing, according to some embodiments of the present invention.
Figure 2 illustrates a flowchart of a method of manufacturing of an artificial turf with the PCM polyurethane backing and a heat conductive layer on the back side of the PCM polyurethane backing, according to another embodiment of the present invention.
Figure 3 illustrates a flowchart of a method of manufacturing of an artificial turf with two PCM layers (also referred to as PCM coating layers) formed over a top side of a carrier and a heat conductive material formed on a back side of the PU backing, according to yet another embodiment of the present invention
FIG. 4 illustrates a simplified block diagram of a process for forming a polyurethane reaction mixture for the backing of the artificial turf, according to some embodiments of the present invention.
Figure 5 illustrates a "knife over roll" polyurethane backing process, according to some embodiments of the present invention.
Figure 6 illustrates the extrusion of the polymer mixture into a monofilament, according to some embodiments of the present invention.
Figures 7a and 7b illustrate the tufting of an artificial turf fiber and illustrates first and second parts of the fiber, according to some embodiments of the present invention.
Figures 8a and 8b illustrate an artificial turf structure with portions of monofilaments and fibers embedded in a polyurethane backing, according to some embodiments of the present invention.
Figure 9 illustrates an artificial turf structure with a polyurethane backing containing a PCM and a heat conductive layer formed on the back side of the polyurethane backing, according to some embodiments of the present invention.
Figure 10 illustrates an artificial turf structure with a PCM layer formed over a carrier, a polyurethane backing without a PCM and a heat conductive layer formed on the back side of the polyurethane backing, according to some embodiments of the present invention.
Figure 11 illustrates an artificial turf structure with a PCM layer formed over a carrier, and a polyurethane backing without a PCM, according to some embodiments of the present invention.
Figure 12 illustrates an artificial turf structure with first and second PCM layers formed over a carrier, a polyurethane backing without a PCM, and a heat conductive layer formed on the back side of the polyurethane backing, according to some embodiments of the present invention.

### Detailed Description of the Invention

Various embodiments of the present invention will be described in greater detail with reference to the accompanying drawings. Like numbered elements in the figures are either equivalent elements or perform the same function. Elements which have been discussed previously will not necessarily be discussed in later figures if the function is equivalent.

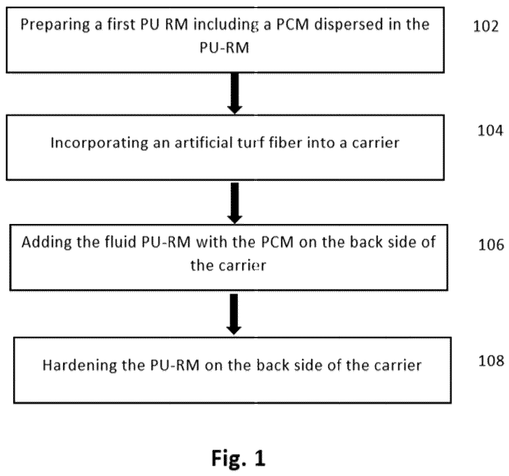

Referring to figure 1, a method for manufacturing an artificial turf is provided, the method comprising preparing a first polyurethane reaction mixture (PU-RM) including a phase change material (PCM) dispersed in the polyurethane reaction mixture in step 102, incorporating an artificial turf fiber into a carrier in step 104, adding the fluid (viscous) polyurethane reaction mixture with the PCM on the back side of the carrier in step 108, and hardening the polyurethane reaction mixture to form a polyurethane backing, wherein the method is characterized in that an effective amount of the PCM is added in the polyurethane reaction mixture. The PCM is added and dispersed via mixing inside the polyurethane reaction mixture before the polyurethane reaction mixture is applied on the back side of the carrier. Once the polyurethane reaction mixture is placed on the back side of the carrier, hardening of the polyurethane reaction mixture is performed to form a solid polyurethane backing with a portion of the turf fiber which protrudes out of the back side of the carrier being securely embedded inside the solid mass of the polyurethane backing. The polyurethane backing enhances the structural strength of the artificial turf and the fiber pulling characteristic of the turf fiber. In addition, because of the addition of the PCM the artificial turf has a passive cooling control property (referred to also simply as cooling property).

Preferably, the polyurethane reaction mixture enters inside the carrier structure before it is fully solidified thus providing the cooling property to the carrier. Depending on the structure of the carrier, the viscosity of the polyurethane reaction mixture, and the rate of the solidification of the polyurethane reaction mixture, the polyurethane reaction mixture can enter deeper inside the carrier to thus increase the cooling property of the artificial turf. In some other embodiments the polyurethane reaction mixture, before it is fully solidified, enters through the carrier and, also, forms a thin coating on a front side of the carrier, thus fully covering both the back side and the front side of the carrier and also filling any voids inside the carrier.

The making of the turf fiber includes generating a polymer mixture, extruding the polymer mixture into a monofilament, quenching the monofilament, reheating the monofilament, and stretching the reheated monofilament to form the monofilament into the artificial turf fiber. The generated polymer mixture further comprises a nucleating agent for crystallizing the polymer within and at the surface of the monofilament. The artificial turf fiber is a bundle of monofilaments.

It may be desirable to manufacture artificial turf fibers having a set of desired properties e.g., in respect to smoothness, tensile strength, resistance to shear forces, and/or resistance to splicing of fibers.

In some embodiments, the artificial turf fiber is a hydrophobic polyolefin fiber inserted into the carrier via a tufting process, or by weaving the artificial turf fiber into the carrier.

In some embodiments, the polyurethane is the reaction product of first and second polyols with an isocyanate, wherein the first polyol is polyether polyol and/or polyester polyol having at least two ("2") hydroxyl groups per molecule, wherein the second polyol is polybutadiene diol, wherein the isocyanate comprises isocyanate monomers, isocyanate polymers or isocyanate prepolymers or a mixture thereof, and wherein the isocyanate monomers, the isocyanate polymers and the isocyanate prepolymers have two or more isocyanate groups per molecule.

The polybutadiene diol is used in an amount of 0.5-10% by weight of a combination of the first polyol and the isocyanate, more preferably an amount of 1.0 - 9.0 % by weight of said combination and most preferably an amount of 4.0-8.0 % by weight of said combination. The polybutadiene diol has a number average molecular weight in the range of 1000 to 6000 g/mol, more preferably in the range of 1.500 to 4.500 g/mol.

The polyurethane reaction mixture further comprises a surfactant in an amount of 0.01% to 1.2 % by weight of the combination of the first and second polyols and the isocyanate, more preferably in an amount of 0.8%-1.0% by weight of said combination and most preferably in an amount of 0.05-0.15 % by weight of said combination, and the fluid polyurethane mass has a density of more than 1000 g/l, preferably having a density in the range of 1100 g/l - 1500 g/l, more preferably in a range of 1200 g/l - 1400 g/l.

The hardening of the fluid polyurethane mass can be performed by heating the polyurethane reaction mixture on the back side of the carrier to a temperature of 70-140°C.

Once the polyurethane backing is formed the artificial turf can be wound and stored in roll form.

The artificial turf made with the PCM is advantageous because it can prevent overheating of the turf.

According to embodiments, the isocyanate is a diisocyanate. According to embodiments, the at least two hydroxyl groups per molecule of the first polyol are two terminal hydroxyl groups. According to embodiments, the polybutadiene diol has an amount of 0.5-10% by weight of a combination of the first polyol (i.e., the polyester-polyol or the polyether-polyol) and the isocyanate. According to some of said embodiments, the polybutadiene diol has an amount of 1.0 - 9 % by weight of said combination and preferably has an amount of 4.0-8.0 % by weight of said combination. Said features may be beneficial as it has been observed that this PBD concentration generates a polyurethane backing that fixes polyolefin fibers embedded therein so strongly that a so-called "stick slip effect" occurs, in particular when using highly hydrophobic monofilaments, e.g. PE-monofilaments: a stick-slip effect describes a particular form of relative movement of two surfaces (e.g. a PE-fiber surface and the polyurethane.-surface surrounding said fiber), whereby the movement of the surfaces alternates between sticking to each other and sliding over each other, with a corresponding change in the force of friction. Typically, the static friction coefficient (a heuristic number) between two surfaces is larger than the kinetic friction coefficient. If an applied force is large enough to overcome the static friction, then the reduction of the friction to the kinetic friction can cause a sudden jump in the velocity of the movement. Typically, the stick slip effect is considered as an unwanted effect, e.g., in respect to the relative movement of human skin and a PE (Polyethylene) fiber as in this context the risk of injuries and skin burns may be increased. However, applicant has surprisingly observed that the stick slip effect in the context of PE/polyurethane surface movements is a desirable and useful effect as it increases the resistance of the fiber to tuft withdrawal forces. Even in case a pulling force is high enough to pull a fiber some distance out of the backing, the stick slip effect will cause the fiber to halt again, thereby causing the static friction coefficient rather the kinetic friction coefficient to take effect.

The "back side" of the carrier as used herein is the side opposite to the side from which the larger portions of the fibers emanate.

The term "tufting" as used herein refers to a method of incorporating a fiber into an existing carrier. Short U-shaped loops of fibers are introduced through the carrier from one side so that their ends point outside of the carrier in the other direction. Usually, the tuft yarns form a regular array of "dots" on the other side. On the one side of the carrier where the U-shaped loops are located, the tuft fibers may be tied for security, although they need not be. The ends of the tuft yarns can then optionally be frayed or otherwise processed, so that they will subsequently create a dense layer of fibers protruding from the carrier.

The term "weaving" as used herein is a method of incorporating an artificial turf fiber (which can be a monofilament or a bundle of monofilaments) into an existing carrier, whereby the artificial turf fiber and the fiber(s) that built the carrier are interlaced. The interlaced fibers and the mesh form a fabric like or cloth like structure. When an artificial tuft fiber is incorporated by weaving, the fiber interlaces a series of mesh fibers at least three times. Thus, when a fiber is incorporated by weaving rather than tufting, a higher fraction of the artificial turf fiber is interlaced in the carrier material. This may increase the resistance to wear and tear of the artificial turf.

According to embodiments, the method further comprises adding a catalyst to the polyols or to the isocyanate or to a reaction mixture comprising the same.

According to embodiments, the fluid polyurethane mass has a density of more than 1000 g/l, preferably having a density in the range of 1100 g/l - 1500 g/l, more preferably in a range of 1200 g/l - 1400 g/l. The first polyol and/or the catalyst may be chosen such that the density of the generated polyurethane reaction mixture is in at least one of the specified density ranges. Said density ranges have been observed to provide Polyurethane artificial turf backings that can be easily laid without bulging, that is elastic and robust against various pulling, pushing and shear forces.

According to some embodiments, the liquid polyurethane reaction mixture is a non-foam polyurethane, i.e., a polyurethane that is (substantially) non-porous. Foams and fluids in this high-density range are often highly viscous and often do not wet fibers and in particular monofilaments within monofilament bundles appropriately. However, by using a more hydrophobic polyurethane form, optionally further comprising a wetting agent, also polyurethane reaction mixtures having the above-mentioned high density can be used for firmly fixing PE filaments by Van-der-Waals forces. Thus, embodiments of the invention may allow to firmly fix hydrophobic fibers also in a high-density polyurethane backing.

According to embodiments, incorporating the artificial turf fiber into the carrier comprises: tufting the artificial turf fiber into the carrier. According to alternative embodiments, incorporating the artificial turf fiber into the carrier comprises weaving the artificial turf fiber into the carrier.

According to embodiments, the artificial turf fiber is a bundle of monofilaments. In this context, using a more hydrophobic polyurethane version, optionally in combination with a wetting agent, is particularly advantageous as standard polyurethane foams and fluids usually are not able to wet the monofilaments located at the inside of a monofilament bundle. By wetting also, the monofilaments inside said bundles, the mechanical fixing is significantly increased.

According to embodiments, the artificial turf fiber is a hydrophobic polyolefin fiber, e.g., a polyethylene (PE) fiber, a polypropylene (PP) fiber, a polybutylene fiber or a fiber consisting of a polymer blend comprising a hydrophobic polyolefin as main component.

Depending on the embodiment, the hardening process may be performed passively, e.g., by incubating the liquid polyurethane reaction mixture applied and dispersed on the back side of the carrier at room temperature, or by heating the polyurethane backing for a given time to temperature significantly above room temperature.

According to some embodiments, the hardening of the fluid polyurethane mass comprises heating the polyurethane mass having been applied and dispersed on the back side of the carrier to a temperature of 70-140°C. For instance, the heat is applied for a time period of 1-5 minutes, preferably 2-3 minutes.

The hardening process, also referred to as "curing" process, is performed so that the polyurethane reaction mixture hardens and develops its strength. The hardening (or curing) involves reacting NCO terminal diisocyanates with hydroxyl terminal polyols, The hardened polyurethane reaction mixture on the backing will tightly enclose the portions of the fibers having been incorporated in the fluid polyurethane mass.

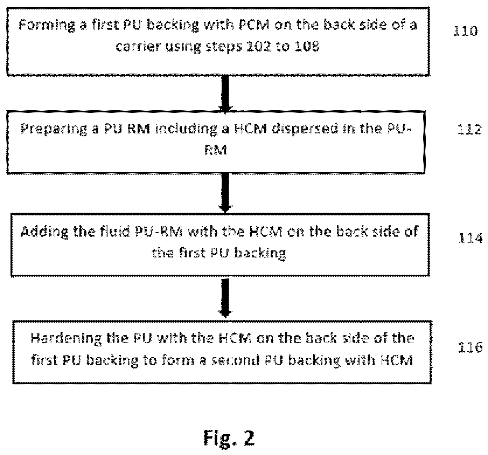

Figure 2 illustrates flowchart of a method of manufacturing of an artificial turf with the PCM polyurethane backing and a heat conductive layer on the back side of the PCM polyurethane backing according to another embodiment of the present invention. The method comprises bed in steps 102 to 108 of figure 1 referred to in combination as step 110. The method further comprises preparing a polyurethane reaction mixture with a heat conductive material (HCM) dispersed therein in step 112. In step 114, the polyurethane reaction mixture with a heat conductive material is applied on the back side of the first polyurethane backing, and in step 116 the polyurethane is hardened to form a second polyurethane with the heat conductive material, also referred to herein as a heat conductive polyurethane backing or heat conductive layer. The heat conductive material may include graphite, or graphene or a combination thereof for improved heat conductivity between the substrate and the top layer. The combination of the heat conductive layer and the PCM in the backing layer of the turf structure has been found to be particularly advantageous in preventing the surface of the pavement structure from overheating.

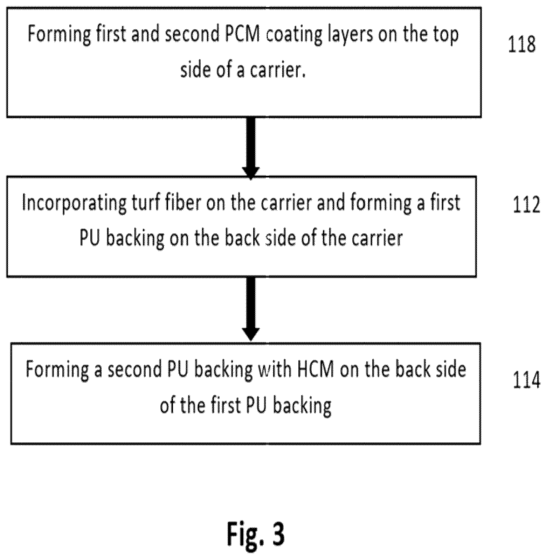

Figure 3 illustrates a flowchart of a method of manufacturing of an artificial turf with two PCM layers formed over the top side of carrier material and a heat conductive material formed on a back side of the PU backing, according to yet another embodiment of the present invention. According to this embodiment no PCM is added in the PU backing but instead the PCM is added in two coating layers formed over the top side of the carrier. According to figure 3, the method comprises forming first and second coating layers on the top side of the carrier in operation 118, incorporating a turf fiber on the carrier and forming a first PU backing PCM on the back side of the carrier in operation 112 and forming a second PU backing with HCM on the back side of the first PU backing in operation 114. It is noted that although two PCM layers are described to be made in the embodiment of Figure 3, in a variation of this embodiment only one PCM layer may also be formed. Forming two PCM layers may be advantageous because it may allow easier application of additional PCM, and may also allow using different PCMs in each of the two coatings with different melting points. Hence, the two PCM layers may be identical or may be different. Also, in another variation of the embodiment of figure 3 the forming of the second PU backing with the heat conductive material may be omitted.

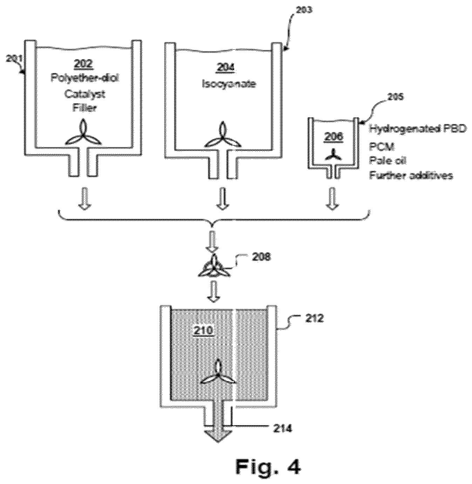

Figure 4 illustrates multiple tanks and mixers comprising educts for creating the polyurethane reaction mixture according to an example. A first mixing unit 201 (also referred to as first tank or first container) is used for creating a first mixture 202 comprising the polyether polyol or the polyester polyol. For example, the first mixture 202 comprises a polyether-polyol, e.g., a polyether-polyol having a number average molecular weight of about 4000 g/mol, e.g., a polyol based on polymerized propylene oxide. The polyether polyol may be obtained e.g., in the form of a ready-made polyol.

Optionally, the first mixture 202 comprises filler materials. Adding a filler may reduce cost and/or help to achieve a particular look or weight. Fillers can be, for example selected from the group ground limestone, precipitated calcium carbonate, China clay, coal fly ash, silicates and other inert material including non-reactive liquids. Moreover, fillers with flame retardant and /or intumescent efficiency like aluminum hydroxide (Al(OH)₃) or ammonium polyphosphate (NH₄PO₃]ₙ(OH)₂) can be used or mixtures of the aforementioned fillers.

Moreover, the first mixture 202 may comprise a catalyst for boosting the polyaddition reaction that generates the polyurethane. The catalyst can be, for example, amine compounds and metal-organo complexes. Traditional amine catalysts have been tertiary amines such as triethylenediamine (TEDA, 1,4-diazabicyclo[2.2.2]octane or DABCO), dimethylcyclohexylamine (DMCHA), and dimethylethanolamine (DMEA). Metal-organo complexes used as polyurethane catalysts can be based e.g., on mercury (e.g., mercury carboxylates), lead, tin (e.g., alkyl tin carboxylates and oxides), bismuth, and zinc (e.g., bismuth and zinc carboxylates). The first mixture is then stored in the first tank 201, e.g., a day tank, i.e., a tank sized to provide a day's worth of usage.

Preferably a mixture of tin organic and an amine catalyst is used. Suitable amines include, for example, Cyclohexyldimethylamine, 2-dimethylaminoethanol, 4-ethylmorpholine, N,N,4-trimethylpiperazine-1-ethylamine, 1,4-dimethylpiperazine, 3-aminopropyldimethylamine, 2,2'-iminodiethanol, 1-methylimidazole, 1,2-dimethylimidazole, 2-[[2-(dimethylamino)ethyl]methylamino]ethanol, N-[3-(dimethylamino)propyl]-N,N',N'-trimethylpropane-1,3-diamine, formic acid, compound with 2,2'-oxybis[N,N-dimethylethylamine] (2:1), 1,1'-[[3-(dimethylamino)propyl]imino]bispropan-2-ol, + 2-[(2-[2-(dimethylamino)ethoxy]ethyl)methylamino]ethanol, Benzyldimethylamine 4-methylmorpholine, N,N,N',N'-tetramethylhexamethylenediamine, 2-[2-(dimethylamino)ethoxy]ethanol, 1,4-diazabicyclooctane, Bis(2-dimethylaminoethyl)(methyl)amine, N,N,N',N'-tetramethyl-2,2'-oxybis(ethylamine, 2,2'-dimorpholinyldiethyl ether, 1,8-diazabicyclo[5.4.0]undec-7-ene, N'-[3-(dimethylamino)propyl]-N,N-dimethylpropane-1,3-diamine, N,N,N',N',N",N"-hexamethyl-1,3,5-triazine-1,3,5(2H,4H,6H)-tripropanamine, and N,N-bis[3-(dimethylamino)propyl]-N',N'-dimethylpropane-1,3-diamine.

The second mixture 204, i.e., the isocyanate monomer/polymer/prepolymers mixture, e.g., MDI, is stored in a second tank 203 that is preferably also a day tank. A further container 205 that is typically of a smaller size than the first and second tanks comprises a third substance mixture 206 including the PCM. For the embodiment of Figure 3 no PCM is added in the tank 205.

In the embodiment illustrated in figure 4, PBD is also added in the third substance mixture 206, however, it should be understood that in other embodiments no PBD is added.

Optionally further substances such as an antimicrobial agent, a wetting agent, pale oil and/or one or more further additives may be added. The one or more further additives can be, for example, flame retardants, pigments, extenders, cross linkers, blowing agents etc. The containers 201, 203, and 205 may be part of or coupled to a blender 208. The blender 208 receives the first mixture 202 from the first container 201, receives the second mixture 204 from the second container 203 and receives the PBD, the PCM, and the one or more optional substances (wetting agent, pale oil and/or further additives) from the third container 205. The blender 208 blends the first, second and third mixtures received from the respective tanks in amounts suited to generate a polyurethane reaction mixture 210 whose substance concentrations are within the ranges specified herein for embodiments of the invention. For example, the first, second and third mixtures are blended such that the number of OH groups in the first polyol molecules in the first mixture in combination with the number of OH groups in the PBD molecules in the third mixture will roughly correspond (e.g., in a range of ratios ranging from "0.9:1" to "1:0.9") to the number of NCO groups in the isocyanate molecules (monomers and prepolymers). The third mixture 206 is added by the blender 208 to the reaction mixture 210 in such an amount that the PCM in the reaction mixture has a concentration range of from 5.0 to 12.5 % by weight over the total weight of the PU reaction mixture.

The blender 208 may be a low-pressure gear pump, which produces a desired mixing ratio of the first, second and third mixtures. Ratio and material distribution are driven by a computer assisted equipment. Despite the viscosity of the polyurethane reaction mixture 210, the polyurethane reaction mixture enters deeply into the tufts of artificial grass, and wets the textile carrier and the monofilaments contained therein.

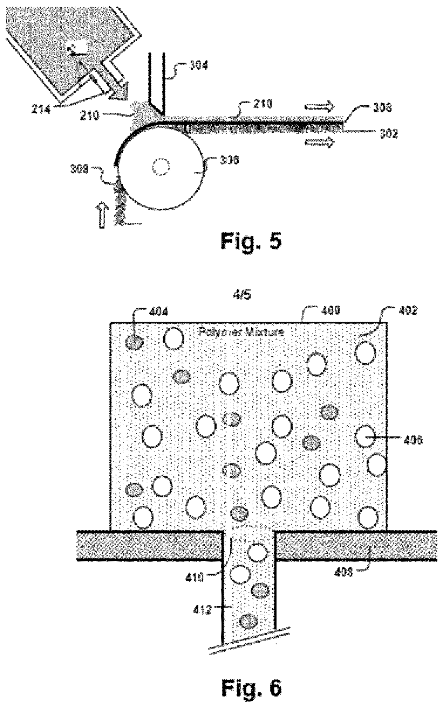

The polyurethane reaction mixture 210 generated by the blender 208 is output to a container 212 that may have the form of a hose. The chamber 212 has an opening 214 that leads to a coater, e.g., a "knife over roll" backing assembly as depicted, for example, in figure 5. Typically, the reaction mixture output by the blender 208 reaches the opening 214 being part of the backing assembly within 30 seconds. At this point, the polyaddition reactions resulting in the generation of the liquid polyurethane reaction mixture used for backing a carrier textile of a piece of artificial turf will largely have completed already, but some reactions may still continue during the backing process.

According to embodiments, the first polyol(s),(optionally the PBD) and the isocyanate in total constitute at least 25%, according to other embodiments at least 40%, or even more than 95% of the total amount of the total reaction mix used for generating the liquid polyurethane reaction mixture that - after a curing process - is used as the artificial turf backing. In a specific example, the reaction mixture comprises in weight percentages about 21.5% isocyanate, 0.5 % PBD, 21.5 % first polyol, 2.1% catalyst, 10 % PCM, 2.5 % additives like oils, dyes or flame retardants, and the remainder filler material.

In another specific example, the reaction mixture comprises about 20% isocyanate, 0.1% PBD, 20 % first polyol, 2.1% catalyst, 7.5% PCM, 2.0 % additives like oils, dyes or flame retardants, and the remainder filler material.

According to preferred embodiments, the liquid polyurethane reaction mixture is a non-foam polyurethane, i.e., a polyurethane that is (substantially) non-porous.

Figure 5 illustrates a "knife over roll" polyurethane backing process and a corresponding backing assembly. The liquid, viscous reaction mixture 210, which is also referred to as liquid polyurethane reaction mixture upon leaving the opening 214 of the container 212, is applied on a carrier 308. A plurality of artificial turf fibers 501 protrude from the front side of the carrier. The liquid polyurethane reaction mixture 210 is applied on the back side of the carrier. The polyurethane reaction mixture is applied continuously while a roll 306 causes the carrier 308 to move in a direction indicated by the arrows. A "knife" 304 shown in cross section view is located at a defined distance above the carrier 308 and ensures that the viscous polyurethane reaction mixture 210 passing the space between the knife 304 and the carrier 308 has a defined height.

The high viscosity of the polyurethane reaction mixture according to embodiments of the invention and the configuration and dimensions of the opening 214 and the speed of the polyurethane reaction mixture flow through this opening are chosen such that a defined amount of polyurethane reaction mixture builds up and accumulates on the front side of the knife 304. This ensures that the thickness of the polyurethane backing of the generated piece of artificial turf is constant.

After the polyurethane reaction mixture 210 is homogeneously applied on the back side of the carrier 308, it is hardened (increase of viscosity) by keeping the coated piece of artificial turf for about 10 minutes at room temperature. Typically, the polyurethane backing is solid 30 minutes after its application on the carrier.

Preferably, in order to speed up the solidification, the artificial turf once the polyurethane reaction mixture is placed on the back side of the artificial turf is exposed to an elevated temperature around 100°C. Typically, after 90 seconds at elevated temperature, 90 to 95% of the polyurethane reaction mixture is "cured" (is in solid state). The heating may be performed, for example, in an oven. For example, the backing assembly may automatically transport the coated piece of artificial turf in an oven.

Figure 6 illustrates a liquid polymer mixture 400 for producing a monofilament 412 in an extrusion process. The polymer is a polyolefin, e.g., a polyethylene mixture. The polymer mixture 400 comprises additives 404, 406 such as UV-stabilizers, pigments, flame retardants or the like. A screw, piston or other device is used to force the polymer mixture 400 through a hole 410 in a plate 408. This causes the polymer mixture 400 to be extruded into a monofilament 412.

In some embodiments, the polymer mixture may comprise polymer beads of a more rigid polymer, e.g., polyamide. Due to flow dynamics during the extrusion process, the beads will tend to concentrate in the center of the monofilament 412. This may lead to a concentration of rigid, thread-like PA regions in the core region of the monofilament while the surface of the monofilament almost completely consists of the hydrophobic PE. Thus, a fiber with increased resilience is provided which has a soft PE surface that protects against injuries and skin burns which, however, has a very hydrophobic surface and may therefore easily detach from a polar polyurethane backing.

Thus, the monofilament is produced by feeding the polymer mixture 400 into a fiber producing extrusion line. The melt mixture is passing the extrusion tool, i.e., a spinneret plate or a wide slot nozzle, forming the melt flow into a filament or tape form, is quenched, or cooled in a water spin bath, dried, and stretched by passing rotating heated godets with different rotational speed and/or a heating oven. The monofilament or fiber may later be annealed online in a second step passing a further heating oven and/or set of heated godets.

According to embodiments, manufacturing an artificial turf fiber (which may comprise one or more monofilaments 412 comprises forming the stretched monofilament into a yarn. Multiple, for example 4 to 8 monofilaments, could be formed or finished into a yarn.

According to embodiments, the extrusion is performed at a pressure of 40-140 bars, more preferably between 60-100 bars. The polymer mixture may be created by adding polymer granules to a solid polymer composition that is mixed and heated until all polymer is melted. For example, the polymer mixture may be heated to reach at the time of extrusion a temperature of 190-260°C, more preferably 210-250°C.

According to embodiments, the stretching comprises stretching the reheated monofilament according to a stretch factor in the range of 1.1-8, more preferably in the range of 3-7.

According to embodiments, the quenching is performed in a quenching solution having a temperature of 10 - 60°C, more preferably between 25°C - 45°C.

According to embodiments, the incorporation of the artificial turf fiber into the carrier comprises tufting or weaving the artificial turf fiber into the carrier.

According to embodiments, the quenching solution, e.g., a water bath, has a temperature (right after the extrusion nozzle or hole(s)) of 10 - 60°C, more preferably between 25°C - 45°C, and even more preferably between 32°C - 40°C.

According to embodiments, the extrusion is performed at a pressure of 80 bar, the polymer mixture at time of extrusion has a temperature of 230°C, the stretch factor is 5 and the quenching solution, e.g., a water bath, has a temperature of 35°C.

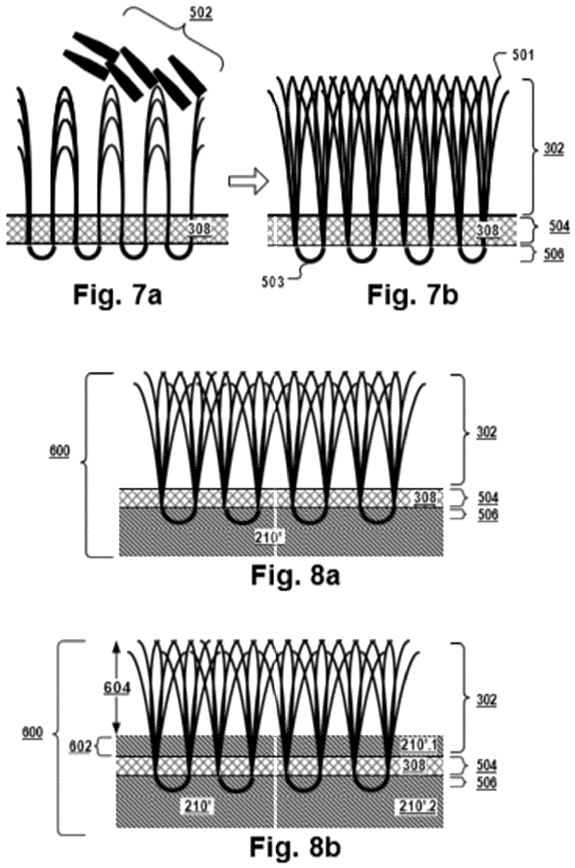

Referring to Figures 7a, and 7b the incorporating of the turf fiber 501 into the carrier 308 includes positioning the fiber 501 so that a first portion of the fiber 302 is protruding to the front side of the carrier (also referred to hereinafter as the front portion of the fiber), a second portion 506 of the fiber is located at the back side of the carrier (also referred to hereinafter as the back portion of the fiber), and a third portion of the fiber 504 is inside the carrier (referred to also as the middle portion of the fiber).

Figure 7a illustrates the tufting of an artificial turf fiber and how a plurality of artificial turf fibers can be arranged in a carrier 308, e.g., a textile plane, by tufting. The carrier 308 may be a textile made of a hydrophobic polymer, e.g., PE. Tufting is a type of textile weaving in which an artificial tuft fiber 501 (that may be a monofilament 412 or a bundle of multiple monofilaments) is inserted on a carrier 308.

A "monofilament" as used herein is a filament generated by extruding a liquid polymer mixture through a single opening or is a slice of a polymer tape generated in accordance with the slit film technique.

After the inserting is done, as depicted in figure 5a, short U-shaped loops of the fiber point outside of the carrier's surface. Then, one or more blades cut 502 through the loops. As a result of the cutting step, two artificial turf fiber ends per loop and monofilament point out from the carrier and a grass-like artificial turf surface is generated as depicted in figure 5b. Thereby, first portions 506 of the monofilaments (corresponding to first portions of the artificial turf fibers) which have been inserted in the carrier 308 are exposed to a bottom side (back side) of the carrier and second portions 302 of said monofilaments are exposed to a top side of the carrier. Some portions 504 of the monofilaments / fibers are located within the carrier. Fibers or fiber bundles may protrude in loops 503 outside of the back side of the carrier. The piece of artificial turf generated in the tufting process may be forwarded to the backing assembly depicted in Figure 3 for applying the polyurethane reaction mixture 210 on the back side of the carrier.

Figures 8a and 8b show portions of monofilaments and fibers which are embedded in the polyurethane backing. Reference number 600 refers to the total height of a piece of artificial turf having been coated with the polyurethane reaction mixture 210 generated according to embodiments of the invention.

Figure 8a illustrates a piece of artificial turf made from a highly viscous polyurethane reaction mixture and/or with a close meshed carrier 308 that prevents the polyurethane reaction mixture from penetrating and transgressing the carrier 308. In this embodiment, second portions 302 of the fibers 501 protrude from the carrier 308 to the front side of the artificial turf and are not embedded in a polyurethane film as the liquid polyurethane reaction mixture 210 was not able to reach the front side of the carrier during the backing process. Also, the fiber portions 504 within the carrier are not wetted by the polyurethane reaction mixture in this embodiment. However, the back side portions 506 of the fibers are embedded in the liquid polyurethane reaction mixture 210 during the backing process. Although the length of these back side portions is comparatively small, the high hydrophobicity and the improved wetting of the fibers by the polyurethane reaction mixture 210 ensure that the fibers are firmly fixed by Van-der-Waals forces in the backing and that a slip stick effect further protects the fibers against tuft withdrawal forces. Figure 8b illustrates a piece of artificial turf made from a less viscous polyurethane reaction mixture (compared to the embodiment of figure 6a) and/or with a wide-meshed carrier 308. The carrier may be a textile mesh or another type of material that comprises perforations that allow the polyurethane reaction mixture 210 to enter the carrier and reach the front side of the artificial turf. Thus, the front portion 302 of the fibers in figure 6b comprises an outer portion 604 which is not embedded in the polyurethane film 210 and an inner portion 602 which is embedded in the polyurethane film 210.2 which has entered the carrier. In addition, portions 504 and 506 are wetted by and are embedded in the liquid polyurethane reaction mixture 210. Thus, the carrier, portions of the fibers inserted in the carrier and further portions 602 of the fibers at the front side of the carrier may become embedded in the polyurethane backing in addition to the portions 506 on the back side of the carrier. This embodiment of FIG 6B is advantageous in that the PCM containing PU backing is applied both on the back side and the front side of the carrier thus providing the cooling protection for the whole structure of the artificial turf except for the outer portion 604 of the fibers.

The liquid polyurethane reaction mixture 210 added in the backing process on the back side of the carrier surrounds and thereby mechanically fixes at least some portions of the monofilaments of the arranged artificial turf fibers. Then, the liquid polyurethane mixture 210 solidifies into a polyurethane artificial turf backing 210' at room temperature or in an oven. The solid film acts as the artificial turf backing. In some examples, additional backing layers may be added on the bottom of the artificial turf backing.

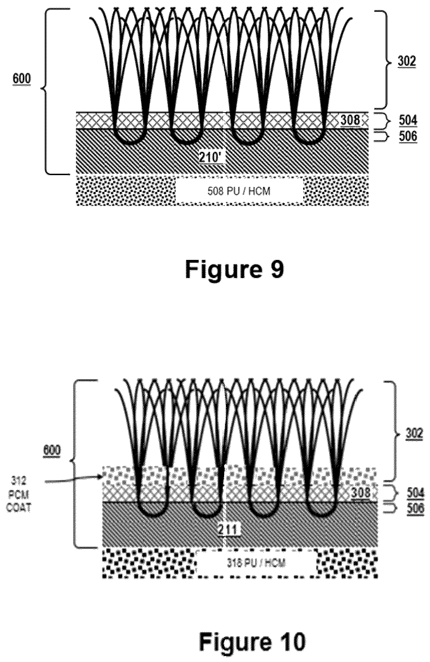

Referring to figure 9 an illustration of the artificial turf structure obtained by the method of figure 2. The structure is identical to the structure of Figure 8a but it further includes a second PU backing 318 which includes a heat conductive material (HCM) such as graphite, graphene, or a combination of the two.

Figure 10 is an illustration of the artificial turf structure obtained by the method of figure 3. The structure further includes a PCM coating 312 that is formed over the carrier 308. The PCM coating 312 may be a single layer of coating applied in a single operation or may be a double layer of coating applied sequentially over the carrier 308. In this embodiment, the PU backing 211 is formed as described earlier for backing 210' but without any PCM added. The turf structure of the embodiment of figure 10 further comprises the heat conductive layer 318 which may be made as described earlier for the embodiment of figure 9.

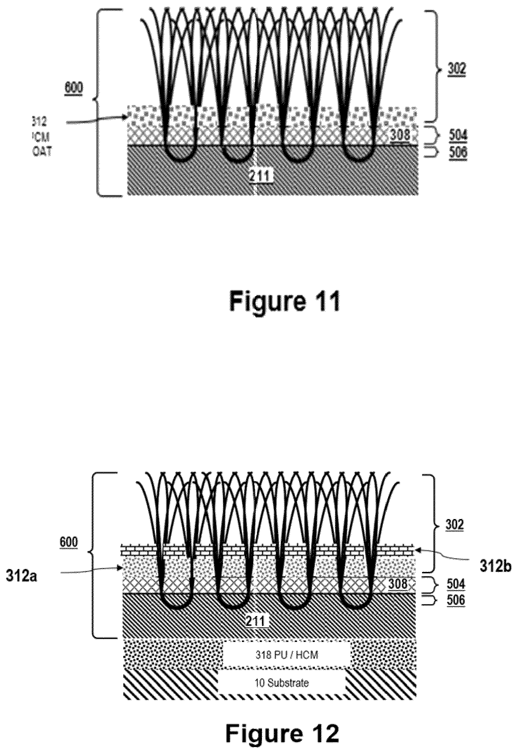

Figure 11 illustrates a variation of the embodiment of figure 10 wherein there is no heat conductive layer 318 formed on the underside of the PU backing 211. Hence, the structure of figure 11 is identical to the structure of figure 10 except that there is no heat conductive layer 318.

Referring to figure 12, in some embodiments, the PCM coating 312 of the embodiments of figures 10 and 11 may comprise first and second PCM layers 312a and 312b each containing at least one PCM for passive control of the temperature of the turf structure. The turf structure may also contain the heat conductive layer 318 as shown in the embodiment of figure 10. The heat conductive layer 318 may be adjacent to a substrate of the turf installation for the effective transfer of heat to and from the ground and the PCM layers.

The first and second PCM layers 312a, and 312b may serve to control the turf structure temperature and for sealing the turf structure to prevent rain from penetrating inside the turf structure. In some embodiments, the first and second PCM layers may also serve as a cushioning and/or coloring coating. Any suitable cushioning and/or coloring materials may be used.

The first and second PCM layers 312a, 312b may each comprise at least one PCM, preferably at least two PCMs, and most preferably at least three PCMs. When at least two PCMs or at least three PCMs are used, the PCMs may be selected to have different melting points within a desired range in order to provide improved temperature control of the turf structure.

The first and second PCM layers 312a, 312b may each comprise from 4.0 to 10.0 % by weight, in particular from 5.0 to 9.0 % by weight, and more in particular from 6.0 to 8.0 % by weight based on a total weight of each PCM layer on a wet basis. On a dry basis, i.e., after application and drying of any water (or solvent), the first and second PCM layers 312a, 312b may each comprise from 5.0 to 12.5 % by weight, in particular from 6.0 to 10.0 % by weight, and more in particular from 7.0 to 9.0 % by weight based on a total weight of each PCM layer.

In some embodiments, the PCM in each of the first and second PCM layers 312a, 312b may be from 6.5 to 7.5 % by weight based on the total weight of each PCM layer on a wet basis, or from 7.5 to 8.5 % by weight on a dry basis.

Each of the first and second PCM layers 312a, 312b may be an acrylic latex layer, a styrolbutadiene (also known as styrenebutadiene) layer or a layer that is based on a combination of acrylic latex and carboxylated styrolbutadiene. Each of the first and second PCM layers 312a, 312b may comprise a significant portion (e.g., more than 40% or even more than 60% of its weight) of filling materials such as sand and/or chalk which improve the surface roughness and the grip.

The first and second PCM layers 312a, 312b may each have a height (also referred to as thickness) of 100 µm to 400 µm, in particular 200 µm to 300 µm, and more in particular 225 µm to 275 µm. In some embodiments the first and second PCM layers may each have a height of 250 µm. Hence, when two PCM layers 312a, 312b are used the total height of the PCM layers combined may be 200 µm to 800 µm, in particular 400 µm to 600 µm, and more in particular 450 µm to 550 µm.

The first and second PCM layers 312a, 312b may comprise the same PCM but in different amounts with the amount of the PCM in the second PCM layer 312b being higher (or greater) than the amount of the PCM layer in the first PCM layer 312a. For example, the amount of the PCM in the first PCM layer 312a may be at least 5.0 %, in particular 10 to 30 %, and more in particular 10 to 25 % by weight less than the amount of the PCM in the second PCM layer 312b. The amount of the PCM in the first PCM layer 312a refers to the weight of the PCM over the weight of the total material of the first PCM layer 312a. The amount of the PCM in the second PCM layer 312b refers to the weight of the PCM over the weight of the total material of the second PCM layer 312b.

Decreasing the PCM content from a higher amount at the outermost second PCM layer 312b towards the innermost layer of the first PCM layer 312a may improve utilization of the PCM employed for removing heat when the temperature rises at the melting point of the PCM while keeping the temperature of the turf structure 100 from rising above a desired temperature range. It may be also advantageous in returning the PCM back to its solid phase when the temperature drops, thus releasing heat to maintain the temperature of the turf structure from dropping significantly. Thus, this configuration with the PCM gradient between the two layers may be particularly advantageous for controlling the temperature of outdoor turf structures for sport courts or playgrounds within a desirable temperature range.

In some embodiments, the first and second PCM layers 312a, 312b may include a first PCM and a second PCM respectively, wherein said first and second PCMs may be different and may have different melting points. For example, the first PCM and second PCM or PCMs may be selected to have different melting points. The first PCM in the first PCM layer 312a may have the lower melting point. The amount of the first and second PCM in each layer may differ. For example, the first PCM layer 312a may have a lower amount of the first PCM than the amount of the second PCM in the second PCM layer 312b. For example, the amount of the first PCM layer in the first PCM layer 312a may be at least 5.0 % by less, in particular 10 to 30 %, and more in particular 10 to 25 % less than the amount of the second PCM in the second PCM layer 312b.

In some embodiments, the first and second PCM layers 312a, 312b may each comprise two PCMs, and the total amount of the two PCMs in each layer may be different, with the total amount of the two PCMs being less in the first PCM layer 312a than in the second PCM layer 312b.

In some embodiments, the first and second PCM layers 312a, 312b may each comprise three PCMs, and the total amount of the three PCMs in each layer may be different, with the total amount of the three PCMs being less in the first PCM layer 312a than in the second PCM layer 12.

According to some embodiments, the PCM layers may be acrylic emulsions comprising besides the PCM, pigments and sand. This may be advantageous as the sand gives the surface of the material the rough feel and touch of a sandy court, e.g., a tennis court, whereby the sand grains are firmly fixed in the hardened acrylic emulsion of the PCM layers. Using multiple layers of the PCM layers may increase the amount of PCM and sand added to the pavement structure and, thus, may increase the cooling characteristic and the surface roughness, grip and robustness of the pavement structure. It may also allow varying the type of PCMs and their melting points in each layer which may further improve temperature control of the turf structure.

The heat conductive layer 318 (figure 10) or 508 (figure 9 may comprise a heat conductive material. The heat conductive material may preferably be graphite, graphene, or a combination thereof. In some embodiments, the graphite may be nano-graphite. The heat conductive layer 318 or 508 may be disposed between the PU backing layer 211, 210' and a substrate (not shown). The heat conductive layer 318 or 508 may also be adapted for improving adhesion of the multilayer PCM turf structure to the substrate. The PCM turf structure refers to the PCM layer or layers, the carrier, the turf fibers, the PU backing (with or without PCM) and the heat conductive layer.

The amount of the graphene or the graphite or of the combination of graphene and graphite in the heat conductive layer 318 or 508 may be from 4.0 to 20 % by weight, in particular from 6.0 to 14.0 % by weight, and more in particular from 8.0 to 12.0 % by weight based on the total weight of the heat conductive sub-layer on a wet basis. On a dry basis, the amount of the graphene or the graphite or of the combination of graphene and graphite in the heat conductive layer 318 or 508 may be from 6.0 to 24 % by weight, in particular from 7.0 to 17.0 % by weight, and more in particular from 10.0 to 14.0 % by weight based on the total weight of the filler layer.

In some embodiments, the graphene or graphite or the combination of graphene and graphite in the heat conductive layer 318 or 508 may be from 11.0 to 12.0 % by weight based on the total weight of the heat conductive layer 318 or 508 on a dry basis. In some embodiments, the heat conductive material may comprise nano-graphite. It has been observed that the thermal conductivity of the heat conductive layer 318 or 508 increases gradually with the content of the nano-graphite.

According to embodiments, the heat conductive layer is a layer of at least one coat of synthetic resin with the heat conductive material mixed therein.

According to some embodiments, the heat conductive layer may be a polyurethane layer with the heat conductive material dispersed homogeneously therein and may be basically free of plasticizer, as in layer 508 of figure 9.

In some embodiments, the synthetic resin may be an acrylic resin or an epoxy resin polymer as, for example, layer 318 of figure 10.

In some embodiments the heat conductive layer 318 may be a tacky acrylic emulsion with the heat conductive material dispersed homogeneously therein.

In the heat conductive layer 318 the graphene and/or graphite may be homogeneously mixed with the main material, e.g., the acrylic primer material. The heat conductive layer 318 improves heat transfer between the PCM layers 312a, 312b and the substrate. The heat conductive layer 318 may also seal and fill in any cracks of the substrate.

Each of the first and second PCM layers 312a, 312b or the PU backing with the PCM 210' may each have three PCMs with staggered melting points selected to keep the turf surface within a desirable temperature. For example, the three PCMS may be selected to have staggered melting points ranging from 15 °C to 45 °C, preferably 25 °C to 40 °C, and more preferably 25 °C to 37 °C. The first, second, and third PCMs may be used in the same or different amounts.

The amount of the total PCM, i.e., all three PCMs, in each of the first and second PCM layers 312a, 312b or in the PU backing layer 210' may be from 4.0 to 10.0 % by weight, in particular from 5.0 to 9.0 % by weight, and more in particular from 6.0 to 8.0 % by weight based on the total weight of each layer on a wet basis. On a dry basis, i.e., after application and drying of the water, the amount of the total PCM, i.e., all three PCMs, in each of the first and second PCM layers 312a, 312b or the PU backing layer 210' may be from 5.0 to 12.5 % by weight, in particular from 6.0 to 10.0 % by weight, and more in particular from 7.0 to 9.0 % by weight based on a total weight of each PCM layer or the PU backing layer 210'. In some embodiments, the total amount of the three PCMs in each of the first and second PCM layers 312a, 312b or in the PU backing layer 210' may be from 6.5 to 7.5 % by weight based on the total weight of each PCM layer or the PU backing layer 210' on a wet basis, or from 7.5 to 8.5 % by weight on a dry basis.

In some embodiments, the heat conductive layer 318 may also function as a filler layer adapted to fill gaps in the substrate and may, thus be sufficiently fluid in ambient temperature to allow it to pass within any gaps or pores of the substrate. The filler may for example, comprise any suitable acrylic-based filler or an epoxy-based filler. Hence, the filler layer is used to smooth out rough substrates. An example of a rough substrate is aged asphalt which has lost a portion of the aggregate. In some embodiments, the filler may be comprised of an acrylic or SBR latex, mineral fillers, rheology modifiers, pigment, water.

In some embodiments the turf structure 300 may comprises a double coat heat conductive layer 318 each including a heat conductive material in an amount that is the same or different.

Although the illustrated embodiments illustrate only one or two PCM layers, in some embodiments more than two PCM layers may be employed without departing from the scope of the present invention. Employing multiple PCM layers may allow a more gradual reduction of the amount of PCM in a direction from the outermost PCM layer to the innermost PCM layer, thus further improving the overall utilization and effectiveness of the PCM or PCMs employed for keeping the turf structure within a desired temperature range even in extreme sunny/warm weather or freezing weather.

The substrate 10 (see FIG. 12) may be for example, concrete, asphalt, composites of asphalt, or composites, a layer of gravel and or stones, levelled ground and the like.

Suitable PCMs may be enclosed inside microcapsules having walls made from polymer resins. For example, the walls of the microcapsules may be made of melamine resin, or urea resin, or modified urea resin or any combinations thereof. Examples of suitable PCMs include paraffin based PCMs. For example, the PCMs may comprise 50-65 % by weight paraffin wax, and water 20-30 % by weight on a wet basis with the remainder being the resin forming the walls of the microcapsules and the macrocapsules. On a dry basis the water content may be closer to about 3 % by weight. By changing the particular type of the paraffin wax the melting point of the PCMs may be modified. The paraffin based PCMs may be encapsulated within a polymeric wall made from polymer resins such as, for example, melamine resin and modified urea resin. For example, for the encapsulated PCM the amount of the melamine resin may be 5 to 15 % by weight and of the modified urea resin may be 0-10 % by weight based on the total weight of the PCM.

In some embodiments, the PCM may be formulated within a secondary supporting structure of hydrophilic silica powder that keeps the PCM as a solid in its macroscopic form. When the PCM structure gets exposed to heat during a hot day the PCM bound to the secondary silica supporting structure melts, thus storing large amounts of heat and keeping the floor surface cool. In the night time, or when the ambient temperature falls, the PCM congeals thus releasing the latent heat associated with the phase change process.

In some embodiments, the PCM may be formulated inside microcapsules and used as such by mixing inside the PCM layers material.

In some embodiments, the PCM microcapsules may be contained inside larger capsules, referred to as macrocapsules. Each macrocapsule may contain a plurality of microcapsules. The macrocapsules may be easier to process. Making the macrocapsules is disclosed in US 6,835,334 to Davis et al. and includes providing a plurality of microcapsules comprising the PCM, and suspending the plurality of microcapsules in a gelling agent solution thereby forming a suspension of microcapsules in the gelling agent. The suspension is then added in a drop-wise manner within a crosslinking solution for crosslinking the gelling agent to form discrete macrocapsules. The formed macrocapsules are separated and dried to less than 1% moisture to produce the PCM macrocapsules. Any suitable gelling agents may be used including, for example, polysaccharides, nonionic polymers, inorganic polymers, polyanions and polycations.

Examples of polysaccharides include alginate and natural ionic polysaccharides such as chitosan, gellan gum, xanthan gum, hyaluronic acid, heparin, pectin, and carrageenan. Examples of suitable ionically crosslinkable polyanions include polyacrylic acid and polymethacrylic acid. Ionically crosslinkable polycations such as polyethylene imine and polylysine are also suitable. A specific example of a non-ionic polymer is polyvinylalcohol. Sodium silicates are examples of useful inorganic polymers. The crosslinking solution may typically comprise any suitable material capable of crosslinking the gelling agent to form a crosslinked gelling agent. Typical crosslinking materials include multivalent ions, in particular cations such as, for example, magnesium, calcium, zinc, barium, strontium, aluminum, iron, manganese, nickel, cobalt, copper, cadmium, lead, or mixtures of any 2 or more thereof. The crosslinking agent may be used in an amount sufficient to crosslink the gelling agent as is known in the art.

The macrocapsules may be mixed with a carrier material that forms the bulk of the PCM structure to form a PCM mixture and then the PCM mixture may be applied over the heat conductive sub-layer to form the PCM layers. For the two-layer PCM structure shown in figure 11, the PCM mixture may be applied twice. The two-step application process for forming the first and second PCM layers 312a and 312b is advantageous because it allows adding an effective amount of PCM and easier processing. It also allows changing the amount and type of PCM or PCMs as well the carrier material composition in each layer. For example, in making the first PCM layer 312a the carrier material may be formulated to provide a certain cushioning characteristic to the turf structure, while in making the second PCM layer 312b the carrier material may be selected to provide a desired color and surface hardness to the floor coating.

Due to the coating thicknesses and application restraints, the macrocapsules may have a particle size in the range of 200 to 800 micrometers (µm), preferably 200 to 400 micrometers, and more preferably 200 to 400 micrometers. The macrocapsules may have a PCM content of at least 50% by weight, preferably at least 60 % by weight, and more preferably 70 % by weight.

The size of the microcapsules may range from 1 to 100 micrometers, preferably from 1 to 80 micrometers, more preferably 10 micrometers to 50 micrometers. The microcapsules may have a relatively high PCM amount, preferably at least 80 % by weight.

Suitable PCMs may include paraffinic hydrocarbons having 13 to 28 carbon atoms. The melting point of a homologous series of paraffin hydrocarbons is directly related to the number of carbon atoms.

Other suitable PCMs may include crystalline materials such as 2,2-dimethyl- 1,3-propanediol, 2-hydroxymethyl-2-methyl-1,3- propanediol, acids of straight or branched chain hydrocarbons such as eicosanoic acid and esters such as methyl palmitate, and fatty alcohols.

Other suitable PCMs include the following commercially available ones from Microtek Laboratories, Inc, under the tradename NEXTEK which are encapsulated PCMs in the form of white powder of mean particle size of 15 to 30 micrometers and the following melting points.

| TRADENAME | Melting Point |
|---|---|
| NEXTEK37 | 37 °C (± 2 °C) |
| NEXTEK32 | 32°C (± 2 °C) |
| NEXTEK43 | 43 °C (± 2 °C) |
| NEXTTEK6 | 6°C (± 2 °C) |
| NEXTTEK18 | 18°C (± 2 °C) |
| NEXTTEK24 | 24°C (± 2 °C) |
| NEXTTEK 37 | 37°C (± 2 °C) |
| NEXTTEK57 | 57°C (± 2 °C) |

Other suitable PCMs of paraffin wax base or hydrated salt base are available from Phase Change Material Product Ltd, a UK company under the tradename PLUSICE in the form of dry powder and various melting points.

### Examples

### Example 1

A turf structure according to figure 4 with a concrete substrate comprised first and second PCM layers 312a, 312b having the same type and amounts of PCM (PCM_1, PCM_2) as per the following wet base compositions.

| First Top PCM layer composition (liquid state) | |
|---|---|
| Acrylic latex solution (dry matter: 60%) | 21% |
| Water | 19 % |
| Chalk | 32 % |
| Thickener (Xanthan Gum) | 17 % |
| Further additives (fungicides, etc.) | 4 % |
| PCM_1 | 7% |

| Second Top PCM layer composition (liquid state) | |
|---|---|
| Acrylic latex solution (dry matter: 60%) | 21% |
| Water | 19 % |
| Chalk | 32 % |
| Thickener (Xanthan Gum) | 17 % |
| Further additives (fungicides, etc.) | 4 % |
| PCM_2 | 7% |

When the PCM layers are dried and the water has evaporated, the weight component of the PCM layers consisted of the filler material (chalk), the thickener, further additives and the PCM. The fraction of acrylic latex in the PCM layers was comparatively small.

The heat conductive layer comprised about 60 % of a PU prepolymer, about 22% of solvent naphtha (Mixtures of light aromatic hydrocarbons obtained from coal tar or petroleum), about 8% of propylene glycol methyl ether acetate (PGMEA, 1-methoxy- 2-propanol acetate) (an adhesive), and about 10% graphite, wherein all percentages refer to weight percentages.

In a variation of example 1, for the heat conductive layer a water based acrylic emulsion was used mixed in water with a composition comprising about 60 % carboxylated styrolbutadiene resin, about 20 % water, about 10% of propylene glycol methyl ether acetate and about 10 % graphene, wherein all percentages refer to weight percentages.

In Example 1, the same PCM (referred to as PCM_1 and PCM_2) was used in the first and second PCM layers 312a, 312b. The PCM comprised three PCM1, PCM2, and PCM3 as per the following table. The PCMs were selected to have staggered melting points in the desired range of from 24°C to 37°C. The PCMs were encapsulated in macrocapsules having a size of 300 micrometers, each microcapsule comprising a plurality of microcapsules of the three PCMS. The three PCMs used and their melting point were as follows:

| PCM1 | PCM1 | PCM2 | PCM3 |
|---|---|---|---|
| TRADENAME | NEXTTEK24 | NEXTEK32 | NEXTEK37 |
| MELTING POINT (°C) | 24 | 32 | 37 |

### Example 2

In Example 2 the same PCM as in Example 1 was used but in different amounts in each of the first and second PCM layers. The same PCM cooling structure as in example 1 using the same three PCMs was applied on a concrete substrate but the total amount of the PCM_1 in the first and second PCM layers 312a, 312b was 7 % by weight and 10 % by weight, respectively, on a wet basis. An improvement in the cooling effect was observed.

### Example 3

In Example 3 the same PCM cooling structure as in example 1 was applied on a concrete substrate but no graphite was added in the heat conductive layer 318. A significant drop in the cooling effect was observed.

### Example 4

In Example 4 the same PCM cooling structure as in figure 9 was used with PCM added in the PU backing layer 210' and heat conductive layer 508 as in Example 1. In example 4 there were no PCM layer 312 over the carrier 308. Excellent cooling was observed but the reduction in temperature overheating was less than in example 1.

### Examples 5, 6 and 7

In Examples 5, 6 and 7 a turf structure was formed as in example 1 except that in each of these examples a different combination of three PCMs were used as shown in the following table.

| | EX. 5 | EX. 6 | EX. 7 |
|---|---|---|---|
| PCM1 | NEXTTEK24 (MP:24 °C) | NEXTTEK18 (MP:18 °C) | PLUSICE S15 (MP: 15 °C) |
| PCM2 | NEXTTEK37 (MP:37 °C) | NEXTTEK24 (MP:24 °C) | PLUSICE S18 (MP:18 °C) |
| PCM3 | NEXTTEK43 (MP:43 °C) | NEXTTEK32 (MP:32 °C) | PLUSICE S20 (MP: 20 °C) |

The PLUSICE S15, S18, and S20 are oleophilic paraffin hydrated salts commercially available from Change Material Product Ltd. Company.

To overcome processing issues, encapsulated PCMs with suitable melt points were selected which are in powder form of small, micron-size particles. Such encapsulated PCMs allow processing using existing dispersing techniques during the compounding and preparation of the various layer compositions.

Also, the application rate controlling the wet film thickness of the texturized water-based PCM layers (topcoats) is at least controlled (e.g., metered) by the particle size distribution of the aggregate materials used. Thus, the encapsulated PCM particle size was selected to prevent adverse changes to the application thickness of the PCM layers.

The above examples showed that the addition of the encapsulated PCM's into the topcoat, or in the PU backing, and addition of graphite/graphene into the heat conductive layer requires no additional dispersion technology or processing change, beyond changes to the masterbatch (MB) thickener and colourant loadings, for rheology and colour adjustment, respectively. Also, no adverse effects were observed on interlayer or substrate adhesion.

### List of Reference Numerals

- 102-102'-104-106-108: method steps
- 201: first tank for first mixture
- 202: first mixture
- 203: second tank for second mixture
- 204: second mixture
- 205: third tank or container for third mixture
- 206: third mixture
- 208: blender
- 210: polyurethane reaction mixture
- 210': polyurethane backing with PCM
- 211: polyurethane backing without PCM
- 212: hose of backing assembly
- 214: opening of hose
- 302: fibers protruding from carrier
- 304: knife
- 306: roll
- 308: carrier, e.g., textile mesh
- 312: PCM layer
- 318: Heat conductive layer
- 400: polymer mixture for fiber creation
- 402: hydrophobic fiber polymer
- 404: additive
- 406: additive
- 408: plate
- 410: opening of extrusion nozzle
- 412: extruded monofilament
- 501: artificial turf fiber
- 502: cutting step
- 503: fiber loop
- 504: fiber portion within carrier
- 506: fiber portion protruding to the back side of the carrier
- 508: Heat conductive layer
- 600: artificial turf
- 602: fiber portion protruding to the front side of the carrier being embedded in the polyurethane reaction mixture
- 604: fiber portion protruding to the front side of the carrier not being embedded in the polyurethane reaction mixture
- PU: Polyurethane
- PCM: Phase Change Material
- HCM: Heat conductive material

## Claims

1. An artificial turf comprising:
a carrier (308);
an artificial turf fiber (501) incorporated into the carrier such that a first portion of the artificial turf fiber (506) protrudes to a back side of the carrier, a second portion of the artificial turf fiber (302) protrudes to a front side of the carrier, and a third portion of the artificial turf fiber (504) is inside the carrier; and
a polyurethane backing (210') formed on the back side of the carrier,
**characterized in that**:
a heat conductive layer (508, 318) is formed on the back side of the polyurethane backing (210', 211), the heat conductive layer comprising graphite, graphene, or a combination of graphite and graphene, and
a phase change material (PCM) is added in the polyurethane backing (210') and/or in at least one layer (312) formed over the carrier (308).

2. The artificial turf of claim 1, further **characterized in that** the PCM is added both in the polyurethane backing and in the at least one layer (312) over the carrier (308).

3. The artificial turf of claim 2, wherein the heat conductive material is a nano-graphite composite with a content of the nano-graphite ranging from 5.0 to 15.0 % by weight, in particular 8.0 to 12.0 % by weight, and more in particular 9.0 to 11.0 % by weight based on the total weight of the heat conductive sub-layer PCM composition, and
wherein the thermal conductivity increases gradually with the content of the nano-graphite.

4. The artificial turf of any of the claims 1 to 3, wherein the turf fiber (501) comprises hydrophobic polyethylene fibers selected from the group consisting of polyethylene homopolymer fibers, polyethylene alloy fibers, polyethylene copolymer fibers, and polyethylene impact copolymer fibers.

5. The artificial turf of any of the claims 1 to 4, wherein the at least one PCM layer comprises a first and a second PCM layers (312a, 312b), the second PCM layer (312b) being disposed on the first PCM layer (312a);
wherein the first PCM layer (312a) comprises at least one first PCM,
wherein the second PCM layer (312b) comprises at least one second PCM
wherein the at least one first and second PCMs are dispersed within first and second acrylic materials, respectively,

6. The artificial turf of any of the claims 2 to 5, wherein the heat conductive material is dispersed within a polyurethane (PU) or an acrylic resin material.

7. The artificial turf of claims 5 or 6, wherein the at least one first and second PCMs are the same or different and have a melting point from 15 °C to 45 °C, preferably 25 °C to 40 °C, and more preferably 25 °C to 37 °C, and
the amount of the PCM in the first PCM layer (312a) is at least 5.0 %, in particular 10 to 30 %, and more in particular 10 to 25 % less than the amount of the PCM in the second PCM layer (312b).

8. The artificial turf of claims 1, 2, and 4 to 7,
wherein the amount of the graphene or the graphite or of the combination of graphene and graphite is from 6.0 to 24 % by weight in particular from 7.0 to 17.0 % by weight, and more in particular from 10.0 to 14.0 % by weight based on the total weight of the heat conductive layer on a dry basis,
wherein the at least one PCM layer comprises from 5.0 to 12.5 % by weight, in particular from 6.0 to 10.0 % by weight, and more in particular from 7.0 to 9.0 % by weight based on a total weight of the at least one PCM layer on a dry basis,
wherein the at least one PCM layer has a height of 200 µm to 800 µm, in particular 400 µm to 600 µm, and more in particular 450 µm to 550 µm, and
wherein the heat conductive layer has a height of 5 µm - 500 µm, 50 µm - 300 µm, preferably 100 µm - 150 µm.

9. The artificial turf of any of the claims 1, 2, and 4 to 8,
wherein the graphene or graphite or the combination of graphene and graphite in the at least one heat conductive sub-layer is from 11.0 to 12.0 % by weight based on the total weight of the heat conductive sub-layer on a dry basis,
wherein each of the at least one first PCM and the at least one second PCM are the same PCM and are used in the same amount, and
wherein the artificial turf is positioned on substrate 10 comprising concrete, asphalt, sand, stone, wood, or clay, preferably concrete or asphalt.

10. The artificial turf of any of the preceding claims,
wherein the at least one PCM is a paraffin-based material preferably encapsulated inside microcapsules or macrocapsules, each macrocapsule containing a plurality of microcapsules,
wherein the macrocapsules have a particle size of 200 to 800 micrometers, preferably 200 to 400 micrometers, and more preferably 200 to 400 micrometers, and
wherein the microcapsules have a particle size of 15 to 30 micrometers.

11. The artificial turf of any of the preceding claims, wherein
the at least one PCM is within a secondary supporting structure of hydrophilic silica powder that keeps the PCM solid in its macroscopic form.

12. A method for manufacturing an artificial turf (600), the process comprising:
preparing a viscous polyurethane reaction mixture (102),
incorporating artificial turf fiber into a carrier (104); and
adding the viscous polyurethane reaction mixture on a back side of the carrier (106) to form a polyurethane backing (210'), and
hardening the viscous polyurethane reaction mixture (108) to form polyurethane backing on the back side of the carrier,
wherein the method is **characterized in that**:
a heat conductive layer (508, 318) is formed on the back side of the polyurethane backing (210', 211), the heat conductive layer comprising graphite, graphene, or a combination of graphite and graphene, and
a PCM is added in the polyurethane reaction mixture (210) and/or forming at least one PCM layer over the carrier, the PCM layer comprising at least one PCM.

13. The method of claim 12, wherein the polyurethane reaction mixture (210) includes at least one polyol, at least one isocyanate and a curing agent, and wherein the at least one PCM is in encapsulated form and is mixed in the PU reaction mixture together with other additives and an antimicrobial agent.

14. The method of claims 12 or 13, wherein the incorporating of the fiber into the carrier (104) positions the fiber (501) so that a first portion (506) of the fiber (501) is located at the back side of the carrier (308), a second portion (302) of the fiber (501) is protruding to the front side of the carrier (308), and a third portion of the fiber is in the middle of the carrier (308).

15. The method of any of the claims 12 to 14, wherein the heat conductive layer comprises a nano-graphite composite with a content of the nano-graphite ranging from 5.0 to 15.0 % by weight, in particular 8.0 to 12.0 % by weight, and more in particular 9.0 to 11.0 % by weight based on the total weight of the heat conductive sub-layer PCM composition, and
wherein the thermal conductivity increases gradually with the content of the nano-graphite.

## Patentansprüche

1. Kunstrasen, umfassend:
einem Träger (308);
eine Kunstrasenfaser (501), die so in den Träger eingebettet ist, dass ein erster Abschnitt der Kunstrasenfaser (506) zur Rückseite des Trägers hin vorsteht, ein zweiter Abschnitt der Kunstrasenfaser (302) zur Vorderseite des Trägers hin vorsteht und ein dritter Abschnitt der Kunstrasenfaser (504) sich innerhalb des Trägers befindet; und
eine Polyurethan-Rückseite (210'), die auf der Rückseite des Trägers ausgebildet ist,
**dadurch gekennzeichnet, dass**:
eine wärmeleitende Schicht (508, 318) auf der Rückseite der Polyurethan-Trägerlage (210', 211) ausgebildet ist, wobei die wärmeleitende Schicht Graphit, Graphen oder eine Kombination aus Graphit und Graphen umfasst, und
ein Phasenwechselmaterial (PCM) in der Polyurethan-Trägerfolie (210') und/oder in mindestens einer über dem Träger (308) ausgebildeten Schicht (312) hinzugefügt ist.

2. Der Kunstrasen nach Anspruch 1, dadurch weiter gekennzeichnet, dass das PCM sowohl in der Polyurethan-Trägerlage als auch in der mindestens einen Schicht (312) über dem Träger (308) hinzugefügt wird .

3. Der Kunstrasen nach Anspruch 2, wobei das wärmeleitende Material ein Nanographit-Verbundstoff mit einem Gehalt an Nanographit im Bereich von 5,0 bis 15,0 Gew.-%, insbesondere 8,0 bis 12,0 Gew.-% und insbesondere 9,0 bis 11,0 Gew.-%, bezogen auf das Gesamtgewicht der wärmeleitenden Unterschicht-PCM-Zusammensetzung, ist, und
wobei die Wärmeleitfähigkeit mit dem Gehalt an Nanographit allmählich zunimmt.

4. Kunstrasen nach einem der Ansprüche 1 bis 3, wobei die Rasenfaser (501) hydrophobe Polyethylenfasern umfasst, die aus der Gruppe ausgewählt sind, die aus Polyethylen-Homopolymerfasern, Polyethylen-Legierungsfasern, Polyethylen-Copolymerfasern und Polyethylen-Impact-Copolymerfasern besteht.

5. Der Kunstrasen aus einem der Ansprüche 1 bis 4, wobei die mindestens eine PCM-Schicht eine erste und eine zweite PCM-Schicht (312a, 312b) umfasst, wobei die zweite PCM-Schicht (312b) auf der ersten PCM-Schicht (312a) angeordnet ist;
wobei die erste PCM-Schicht (312a) mindestens ein erstes PCM umfasst,
wobei die zweite PCM-Schicht (312b) mindestens ein zweites PC M umfasst
wobei das mindestens eine erste und zweite PCM jeweils in einem ersten und zweiten Acrylmaterial dispergiert sind,

6. Kunstrasen nach einem der Ansprüche 2 bis 5, wobei das wärmeleitende Material in einem Polyurethan (PU) oder einem Acrylharzmaterial dispergiert ist.

7. Kunstrasen nach Anspruch 5 oder 6, wobei das mindestens eine erste und zweite PCM gleich oder unterschiedlich sind und einen Schmelzpunkt von 15° C bis 45° C, vorzugsweise 25° C bis 40° C und noch bevorzugter 25° C bis 37° C aufweisen, und
die Menge des PCM in der ersten PCM-Schicht (312a) mindestens 5,0 %, insbesondere 10 bis 30 % und insbesondere 10 bis 25 % geringer ist als die Menge des PCM in der zweiten PCM-Schicht (312b).

8. Kunstrasen nach den Ansprüchen 1, 2 und 4 bis 7,
wobei die Menge an Graphen oder Graphit oder der Kombination aus Graphen und Graphit 6,0 bis 24 Gew.-%, insbesondere 7,0 bis 17,0 Gew.-% und insbesondere 10,0 bis 14,0 Gew.-%, bezogen auf das Gesamtgewicht der wärmeleitenden Schicht in trockenem Zustand, beträgt,
wobei die mindestens eine PCM-Schicht 5,0 bis 12,5 Gew.-%, insbesondere 6,0 bis 10,0 Gew.-% und insbesondere 7,0 bis 9,0 Gew.-%, bezogen auf das Gesamtgewicht der mindestens einen PCM-Schicht auf Trockenbasis, umfasst,
wobei die mindestens eine PCM-Schicht eine Höhe von 200µ m bis 800µm, insbesondere 400µm bis 600µm und insbesondere 450µm bis 550µm aufweist, und
wobei die wärmeleitende Schicht eine Höhe von 5µm - 500µm, 50µm - 300µm, vorzugsweise 100µm - 150µm aufweist.

9. Kunstrasen nach einem der Ansprüche 1, 2 und 4 bis 8,
wobei das Graphen oder der Graphit oder die Kombination aus Graphen und Graphit in der mindestens einen wärmeleitenden Unterschicht 11,0 bis 12,0 Gew.-%, bezogen auf das Gesamtgewicht der wärmeleitenden Unterschicht auf Trockenbasis, beträgt,
wobei jedes der mindestens einen ersten PCM und der mindestens einen zweiten PCM dasselbe PCM ist und in derselben Menge verwendet wird, und
wobei der Kunstrasen auf einem Untergrund 10 aus Beton, Asphalt, Sand, Stein, Holz oder Ton, vorzugsweise Beton oder Asphalt, angeordnet ist.

10. Kunstrasen nach einem der vorstehenden Ansprüche,
wobei das mindestens eine PCM ein Material auf Paraffinbasis ist, das vorzugsweise in Mikrokapseln oder Makrokapseln eingekapselt ist, wobei jede Makrokapsel eine Vielzahl von Mikrokapseln enthält,
wobei die Makrokapseln eine Partikelgröße von 200 bis 800 Mikrometern, vorzugsweise 200 bis 400 Mikrometern und noch bevorzugter 200 bis 400 Mikrometern aufweisen, und
wobei die Mikrokapseln eine Partikelgröße von 15 bis 30 Mikrometern aufweisen.

11. Kunstrasen nach einem der vorstehenden Ansprüche, wobei
das mindestens eine PCM sich in einer sekundären Stützstruktur aus hydrophilem Siliciumdioxidpulver befindet, das das PCM in seiner makroskopischen Form festhält.

12. Verfahren zur Herstellung eines Kunstrasens (600), wobei das Verfahren umfasst:
Herstellen einer viskosen Polyurethan-Reaktionsmischung (102),
Einarbeiten von Kunstrasenfasern in einen Träger (104); und
Hinzufügen der viskosen Polyurethan-Reaktionsmischung auf die Rückseite des Trägers (106), um eine Polyurethan-Rückseite (210') zu bilden, und
Aushärten der viskosen Polyurethan-Reaktionsmischung (108), um eine Polyurethan-Rückseite auf der Rückseite des Trägers zu bilden,
wobei das Verfahren **dadurch gekennzeichnet ist, dass**:
eine wärmeleitende Schicht (508, 318) auf der Rückseite der Polyurethan-Trägerlage (210', 211) gebildet wird, wobei die wärmeleitende Schicht Graphit, Graphen oder eine Kombination aus Graphit und Graphen umfasst, und
einem PCM in das Polyurethan-Reaktionsgemisch (210) gegeben wird und/oder mindestens eine PCM-Schicht über dem Träger gebildet wird, wobei die PCM-Schicht mindestens ein PCM umfasst.

13. Verfahren nach Anspruch 12, wobei die Polyurethan-Reaktionsmischung (210) mindestens ein Polyol, mindestens ein Isocyanat und ein Härtungsmittel umfasst, und wobei das mindestens eine PCM in gekapselter Form vorliegt und zusammen mit anderen Additiven und einem antimikrobiellen Mittel in die PU-Reaktionsmischung eingemischt wird.

14. Verfahren nach Anspruch 12 oder 13, wobei durch das Einarbeiten der Faser in den Träger (104) die Faser (501) so positioniert wird, dass sich ein erster Abschnitt (506) der Faser (501) auf der Rückseite des Trägers (308) befindet, ein zweiter Abschnitt (302) der Faser (501) zur Vorderseite des Trägers (308) vorsteht und ein dritter Abschnitt der Faser sich in der Mitte des Trägers (308) befindet.

15. Verfahren nach einem der Ansprüche 12 bis 14, wobei die wärmeleitende Schicht einen Nanographit-Verbundstoff mit einem Nanographit-Gehalt von 5,0 bis 15,0 Gew.-%, insbesondere 8,0 bis 12,0 Gew.-%, und insbesondere 9,0 bis 11,0 Gew.-%, bezogen auf das Gesamtgewicht der wärmeleitenden Unterschicht-PCM-Zusammensetzung, und
wobei die Wärmeleitfähigkeit mit dem Gehalt an Nanographit allmählich zunimmt.

## Revendications

1. Gazon artificiel comprenant :
un support (308) ;
une fibre de gazon artificiel (501) incorporée dans le support de telle sorte qu'une première partie de la fibre de gazon artificiel (506) dépasse vers la face arrière du support, qu'une deuxième partie de la fibre de gazon artificiel (302) dépasse vers la face avant du support, et qu'une troisième partie de la fibre de gazon artificiel (504) se trouve à l'intérieur du support ; et
un support en polyuréthane (210') formé sur la face arrière du support,
**caractérisé en ce qu'**une couche thermoconductrice (508, 318) est formée sur la face arrière du support en polyuréthane (210', 211), ladite couche thermoconductrice comprenant du graphite, du graphène ou une combinaison de graphite et de graphène, et **en ce qu'**un matériau à changement de phase (PCM) est ajouté dans le support en polyuréthane (210') et/ou dans au moins une couche (312) formée sur le support (308).

2. Le gazon artificiel selon la revendication 1, **caractérisé en ce que** le PCM est ajouté à la fois dans le support en polyuréthane et dans au moins une couche (312) formée sur le support (308).

3. Le gazon artificiel selon la revendication 2, dans lequel le matériau thermoconducteur est un composite de nano-graphite avec une teneur en nano-graphite comprise entre 5,0 et 15,0 % en poids, en particulier entre 8,0 et 12,0 % en poids, et plus particulièrement entre 9,0 et 11,0 % en poids par rapport au poids total de la composition de la sous-couche thermoconductrice à base de PCM, et dans lequel la conductivité thermique augmente progressivement avec la teneur en nano-graphite.

4. Le gazon artificiel selon l'une quelconque des revendications 1 à 3, dans lequel la fibre de gazon (501) comprend des fibres de polyéthylène hydrophobes choisies dans le groupe constitué par les fibres d'homopolymère de polyéthylène, les fibres d'alliage de polyéthylène, les fibres de copolymère de polyéthylène et les fibres de copolymère de polyéthylène à impact.

5. Le gazon artificiel selon l'une quelconque des revendications 1 à 4, dans lequel la ou les couches de PCM comprennent une première et une deuxième couches de PCM (312a, 312b), la deuxième couche de PCM (312b) étant disposée sur la première couche de PCM (312a) ; la première couche de PCM (312a) comprenant au moins un premier PCM, la deuxième couche de PCM (312b) comprenant au moins un deuxième PCM, et lesdits premier et deuxième PCM étant respectivement dispersés dans des matériaux acryliques premier et deuxième.

6. Le gazon artificiel selon l'une quelconque des revendications 2 à 5, dans lequel le matériau thermoconducteur est dispersé dans un matériau à base de polyuréthane (PU) ou de résine acrylique.

7. Le gazon artificiel selon l'une quelconque des revendications 5 ou 6, dans lequel lesdits premier et deuxième PCM sont identiques ou différents et présentent un point de fusion compris entre 15 °C et 45 °C, de préférence entre 25 °C et 40 °C, et plus préférablement entre 25 °C et 37 °C, et dans lequel la quantité de PCM dans la première couche de PCM (312a) est inférieure d'au moins 5,0 %, en particulier de 10 à 30 %, et plus particulièrement de 10 à 25 %, à la quantité de PCM dans la deuxième couche de PCM (312b).

8. Le gazon artificiel selon l'une quelconque des revendications 1, 2 et 4 à 7, dans lequel la quantité de graphène, de graphite ou de leur combinaison est comprise entre 6,0 et 24 % en poids, en particulier entre 7,0 et 17,0 % en poids, et plus particulièrement entre 10,0 et 14,0 % en poids, par rapport au poids total de la couche thermoconductrice à l'état sec ; dans lequel la ou les couches de PCM comprennent de 5,0 à 12,5 % en poids, en particulier de 6,0 à 10,0 % en poids, et plus particulièrement de 7,0 à 9,0 % en poids, par rapport au poids total de la ou des couches de PCM à l'état sec ; dans lequel la ou les couches de PCM présentent une épaisseur comprise entre 200 µm et 800 µm, en particulier entre 400 µm et 600 µm, et plus particulièrement entre 450 µm et 550 µm, et dans lequel la couche thermoconductrice présente une épaisseur comprise entre 5 µm et 500 µm, de préférence entre 50 µm et 300 µm, et plus particulièrement entre 100 µm et 150 µm.

9. Le gazon artificiel selon l'une quelconque des revendications 1, 2 et 4 à 8, dans lequel la teneur en graphène, en graphite ou en leur combinaison dans au moins une sous-couche thermoconductrice est comprise entre 11,0 et 12,0 % en poids par rapport au poids total de la sous-couche thermoconductrice à l'état sec, dans lequel chacun desdits premier et deuxième PCM est identique et utilisé dans la même quantité, et dans lequel le gazon artificiel est disposé sur un substrat (10) comprenant du béton, de l'asphalte, du sable, de la pierre, du bois ou de l'argile, de préférence du béton ou de l'asphalte.

10. Le gazon artificiel selon l'une quelconque des revendications précédentes, dans lequel le ou les PCM sont des matériaux à base de paraffine, de préférence encapsulés à l'intérieur de microcapsules ou de macrocapsules, chaque macrocapsule contenant une pluralité de microcapsules, les macrocapsules présentant une taille de particules comprise entre 200 et 800 µm, de préférence entre 200 et 400 µm, et plus préférablement entre 200 et 400 µm, et les microcapsules présentant une taille de particules comprise entre 15 et 30 µm.

11. Le gazon artificiel selon l'une quelconque des revendications précédentes, dans lequel le ou les PCM sont contenus dans une structure de support secondaire constituée d'une poudre de silice hydrophile maintenant le PCM solide sous sa forme macroscopique.

12. Procédé de fabrication d'un gazon artificiel (600), le procédé comprenant : la préparation d'un mélange réactionnel de polyuréthane visqueux (102), l'incorporation d'une fibre de gazon artificiel dans un support (104), l'ajout du mélange réactionnel de polyuréthane visqueux sur la face arrière du support (106) pour former un support en polyuréthane (210'), et le durcissement dudit mélange réactionnel (108) pour former ledit support en polyuréthane sur la face arrière du support, le procédé étant **caractérisé en ce qu'**une couche thermoconductrice (508, 318) est formée sur la face arrière du support en polyuréthane (210', 211), ladite couche thermoconductrice comprenant du graphite, du graphène ou une combinaison de graphite et de graphène, et **en ce qu'**un PCM est ajouté dans le mélange réactionnel de polyuréthane (210) et/ou en formant au moins une couche de PCM sur le support, ladite couche de PCM comprenant au moins un PCM.

13. Procédé selon la revendication 12, dans lequel le mélange réactionnel de polyuréthane (210) comprend au moins un polyol, au moins un isocyanate et un agent de durcissement, et dans lequel le ou les PCM sont sous forme encapsulée et sont mélangés dans le mélange réactionnel de PU avec d'autres additifs et un agent antimicrobien.

14. Procédé selon les revendications 12 ou 13, dans lequel l'incorporation de la fibre dans le support (104) positionne la fibre (501) de telle sorte qu'une première partie (506) de la fibre (501) soit située à la face arrière du support (308), qu'une deuxième partie (302) de la fibre (501) fasse saillie vers la face avant du support (308), et qu'une troisième partie de la fibre soit située au milieu du support (308).

15. Procédé selon l'une quelconque des revendications 12 à 14, dans lequel la couche thermoconductrice comprend un composite de nano-graphite avec une teneur en nano-graphite comprise entre 5,0 et 15,0 % en poids, en particulier entre 8,0 et 12,0 % en poids, et plus particulièrement entre 9,0 et 11,0 % en poids par rapport au poids total de la composition de la sous-couche thermoconductrice à base de PCM, et dans lequel la conductivité thermique augmente progressivement avec la teneur en nano-graphite.
